# EUROPÄISCHE PATENTSCHRIFT

(11) **EP 2 865 615 B1**
(45) Veröffentlichungstag und Bekanntmachung des Hinweises auf die Patenterteilung: **08.02.2017**
(21) Anmeldenummer: 14190610.7
(22) Anmeldetag: 28.10.2014
(51) Int. Cl.: B65G 33/14, B65G 69/04, B65D 88/54, B65G 65/32, B65G 69/18

(54) **Silo mit Anordnung zur Befüllung**
Silo with assembly for filling
Silo avec système de remplissage

(30) Priorität: 28.10.2013 AT 506982013
(43) Veröffentlichungstag der Anmeldung: 29.04.2015
(73) Patentinhaber: Kurri, Ernst, 2700 WR Neustadt (AT)
(72) Erfinder: Kurri, Ernst, 2700 WR Neustadt (AT)
(74) Vertreter: Müllner, Martin

(56) Entgegenhaltungen:
- EP-A1- 1 629 879
- WO-A1-2011/061503
- WO-A1-2011/107742
- US-A- 3 143 336
- US-A- 4 443 149
- US-A1- 2013 149 081

## Beschreibung

### Technisches Gebiet

Die Erfindung betrifft einen Silo, beispielsweise einen quaderförmigen Siloturm, mit einer Anordnung zu dessen Befüllung, die eine rotierend angetriebene Förderschnecke innerhalb eines diese umgebenden Mantels aufweist.

### Stand der Technik

Zur Befüllung von Silos, die meist aus Beton hergestellt sind, werden Förderbänder, Gebläse oder Förderschnecken eingesetzt. Dabei erfolgt das Befüllen eines Silos von oben, wobei das Schüttgut dann im freien Fall allmählich den Silo füllt. Je nach Schüttgut kommt es dabei zu einer Staubentwicklung, die bei der oft unvermeidlichen elektrostatischen Aufladung oder Funkenbildung aus anderen Gründen zu einer Staubexplosion im Silo führen kann. So hat die Feuerwehr etwa darauf zu achten, bei einem Silobrand nicht mit scharfem Strahl in den Silo zu spritzen. Es gab Präzedenzfälle, bei welchen es erst durch die von einem Löschangriff verursachte Staubentwicklung zu einer Explosion und damit zu einer lebensgefährlichen Situation sowie einer vollständigen Zerstörung mit Brandausbreitung auf die Umgebung gekommen war. Holzspäne erfordern in diesem Sinn eine besondere Vorsicht.

Schneckenförderanlagen verfügen über eine rotierend angetriebene Schraubungsfläche ("Schnecke") im Inneren einer Hülle, die als Rohr ausgebildet ist. Die Steigung sowie die Abmessungen, insbesondere auch der Abstand bzw. die Differenz zwischen Schneckendurchmesser und Rohrinnenwanddurchmesser sind abhängig vom Fördergut, der Fördermenge pro Zeiteinheit und der Förderhöhe. Im Hinblick auf die Nachrüstbarkeit, die Zugänglichkeit und das Raumangebot werden Förderanlagen außerhalb eines Silos aufgebaut und ein Silo von oben befüllt.

Eine Anordnung der eingangs genannten Art ist aus der gattungsgemäßen CA 2298946 A bekannt. Gemäß dieser Schrift ist eine schräg verlaufende Schnecke vorgesehen, die zum Teil außerhalb des Silos und zum Teil innerhalb des Silos verläuft. Im Bereich innerhalb des Silos weist der Mantel der Schnecke Löcher auf, wobei das Ende der Schnecke von einem Deckel, der entweder geschlossen ist oder auch Löcher aufweisen kann, abgeschlossen ist. Da das Material nur durch die Löcher aus dem Inneren der Schnecke in den Silo gelangen kann, werden größere Fremdkörper zurückgehalten und können durch Reversieren der Schnecke wieder ausgebracht werden. Bei leerem Silo fällt das geförderte Material zumindest von etwa der halben Silohöhe auf den Boden, sodass auch bei dieser Lösung eine starke Staubentwicklung unvermeidbar ist.

### Kurzbeschreibung der Erfindung

Die Erfindung löst die Aufgabe, das Schüttgut (z.B. Sägespäne) weitgehend staubfrei in den Silo einzubringen. Dies wird durch die Merkmale des Anspruchs 1 erreicht. Die Befüllung erfolgt somit von unten. Der Käfig lässt das Schüttgut aus der Ummantelung der Schnecke herausquellen, sobald die Oberfläche des Siloinhaltes erreicht ist. Aus dem Käfig treten die Späne durch die auf die Späne einwirkende radiale Komponente der Schneckendrehung aus, sobald der Druck des umgebenden Spänematerials von außen geringer ist als diese radiale Komponente von innen. Nächst der Oberfläche der vorhandenen Befüllung ist dieses Kriterium jedenfalls erfüllt. Dadurch vermischen sich hochgeförderte Späne bereits unter der Oberfläche des Siloinhaltes. Es entsteht an der Oberfläche der Eindruck einer sprudelnden Quelle, die bei fortgesetzter Befüllung mit steigendem Siloinhalt nach oben mit der ansteigenden Oberfläche mitwandert, bis das obere Ende der Förderschnecke erreicht ist. Da die Späne nicht stets bis zum oberen Ende der Förderschnecke hochgefördert und dort dem freien Fall im Inneren des Silos überlassen werden, sondern das Befüllen über die Länge des Käfigs in Füllhöhe und darunter durch den Käfig hindurch erfolgt, kommt es zu keiner Staubbildung.

Es ist zweckmäßig, wenn der Mantel der Förderschnecke eine Vielzahl von achsparallelen Stäben, beispielsweise acht Stäbe mit Kreisquerschnitt, umfasst. Bei einem Schneckendurchmesser von etwa 350 mm können acht Rundstäbe von 20 mm Durchmesser als Käfigstäbe verwendet werden. Der Zwischenraum ist in Abhängigkeit vom Fördermaterial zu wählen. Aus herstellungstechnischen Gründen und im Hinblick auf die Fertigung ist es vorteilhaft, wenn der Käfig mit einer kreiszylindrischen Einhüllenden aus in Achsrichtung unterteilten Teilstücken aufgebaut ist, die jeweils an den Enden über Kreisringe als Flansche zur Halterung der Stäbe und zur gegenseitigen Verbindung der Teilstücke verfügen. Die Flansche können miteinander verschraubt werden, sodass sich als Hülle für die Förderschnecke eine Säule aus übereinander angeordneten und miteinander verschraubten Käfigen ergibt.

Um die Durchtrittsfläche vergrößern oder verkleinern zu können, sieht eine besonders flexible Ausführungsform des Erfindungsgegenstandes vor, dass die Stäbe einen Exzenterquerschnitt aufweisen und in ihrer Drehlage einstellbar und lagefixierbar sind. Auf diese Weise ist die Einstellung der Durchtrittsflächen über die Gesamtlänge der Förderschnecke eventuell auch mit unterschiedlichen Zwischenräumen (etwa nach oben zunehmend) möglich. Eine Weiterbildung ist dadurch gekennzeichnet, dass der Mantel der Förderschnecke aus achsparallelen Lamellen gebildet ist, deren Winkelstellung zwischen einer radialen und einer tangentialen Ausrichtung einstellbar und lagefixierbar ist. Diese Lamellen können die Hülle schließen, also annähernd eine geschlossene Rohrform bewirken, oder im anderen Extremfall die Hülle sehr weit öffnen. Wenn die Stäbe des Käfigs oder Korbes einen v-förmigen Querschnitt aufweisen und beispielsweise als Winkeleisen ausgebildet sind, deren Spitzen zur Drehachse der Schnecke zeigen, dann ergibt sich gewissermaßen eine Diodenwirkung. Der Austrittswiderstand ist in radialer Richtung geringer als der Eintrittswiderstand. So kann der Wirkungsgrad des Hochförderns verbessert werden.

### Kurze Beschreibung der Zeichnungsfiguren

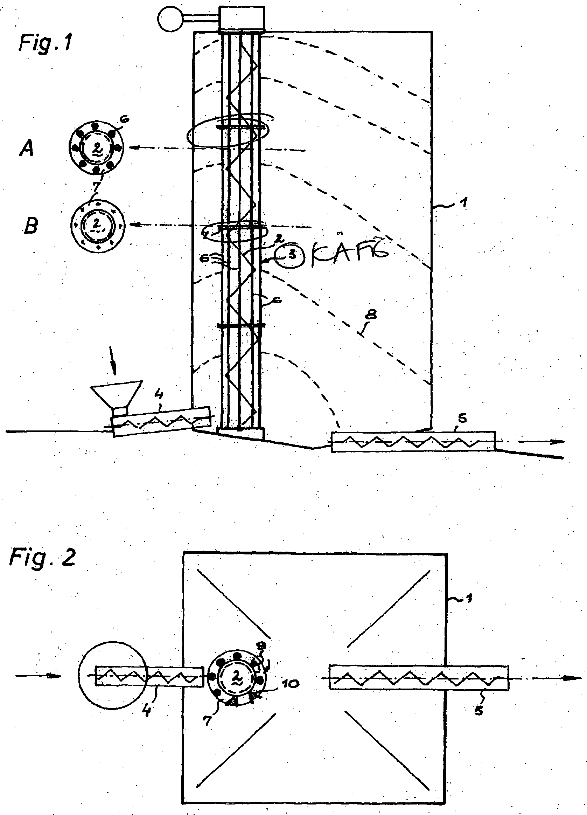

Ein Ausführungsbeispiel einer Anordnung zum Befüllen, eines Silos ist in den Zeichnungen schematisch dargestellt. Fig. 1 zeigt die Anordnung im Aufriss, mit zwei Detailschnitten A und B und Fig. 2 einen Querschnitt zu fig. 1.

### Beschreibung der Ausführungsarten

Ein Silo 1 ist im Ausführungsbeispiel als quaderförmiger Baukörper gefertigt. Die Figuren zeigen symbolhaft eine verkleinerte Ausführung, jedoch eine Förderschnecke 2 mit einem diese einhüllenden Käfig 3 als wesentliches Element der Erfindung in vergrößertem Maßstab. Der Silo 1 verfügt über eine Einförderschnecke 4 und eine Austragschnecke 5, Wobei diese nur angedeutet sind und etwaige Verteiler oder Zuführwerke am Siloboden nicht dargestellt sind. Die Einförderschnecke 4 rotiert in einem geschlossenen Rohr, das allenfalls über Inspektionsöffnungen verfügt. Ein Schüttgut, z.B. Holzspäne, gelangen so bis zum Fuß der Förderschnecke 2, die bei leerem Silo die Holzspäne auf Grund der Rotationsbewegung durch die Öffnungen im Käfig 3 hindurch vorerst über die Bodenfläche des Silos 1 verteilt. Es ergibt sich nach und nach eine Art Vulkankegel durch die hochgeführten und letztlich im Oberflächenbereich des Siloinhaltes aus dem Käfig 3 herausquellenden Späne.

Der Käfig 3 besteht aus mehreren Teilstücken übereinander, die von achsparallel auf einem konzentrischen Kreis zur Schnecke 2 angeordneten Stäben 6 zwischen Kreisringen 7 gebildet werden. Die Stäbe 6 sind mit den Kreisringen 7 verschweißt. Letztere verfügen über axiale Bohrungen für eine flanschartige Verbindung der einzelnen Teilstücke, sodass eine Säule im Inneren des Silos 1 aufgebaut wird.

In Fig. 1 sind Oberflächenlinien 8, als Beispiele für das von unten hochgeförderte Schüttgut während des Befüllens eingezeichnet. Das Detail A zeigt einen Querschnitt durch einen Kranz von Stäben 6 dies Käfigs 3 und Detail B zeigt einen Kreisring 7 an der Stirnseite eines Käfigs 3 als Flansch zur Verbindung mit dem nächsten Teilstück.

In Fig. 2 ist ein Stab 9 mit Exzenterquerschnitt dargestellt. Wenn sämtliche Stäbe in dieser Art drehbar sowie drehlagefixierbar ausgebildet sind, dann kann die Spaltfläche zwischen den Stäben 9 eingestellt und an das Schüttgut angepasst werden, damit ein Hochfördern der Holzspäne trotz des den Käfig 3 umgebenden und teilweise auch in diesen eindringenden lockeren Siloinhaltes mit optimalen Wirkungsgrad erfolgen kann. Der Siloinhalt ummantelt gewissermaßen den Käfig bis zur momentanen Füllhöhe, sodass die hochgeförderten Holzspäne genau dort aus dem Käfig 3 seitlich herausquellen. Ein freier Fall des Schüttgutes findet nicht statt und daher ist eine Staubentwicklung einschließlich einer Explosionsgefahr auszuschließen.

In Fig. 2 sind zwei Stäbe mit v-förmigem Querschnitt als Winkeleisen 10 dargestellt. Wenn der gesamte Käfig oder Korb derart ausgebildet ist, dann wird einem Eindringen des Spänematerials in den Förderbereich, nämlich in den Käfig oder Korb hinein, entgegengewirkt.

## Patentansprüche

1. Silo (1), beispielsweise quaderförmiger Siloturm, mit einer Anordnung zu dessen Befüllung, die eine rotierend angetriebene Förderschnecke (2) innerhalb eines diese umgebenden Mantels aufweist, **dadurch gekennzeichnet, dass** zur weitgehend staubfreien Einbringung von Spänen oder dgl. in den Silo die Förderschnecke (2) im Inneren des Silos (1) in vertikaler Richtung annähernd vom Boden bis zur Silodecke reichend von einem als Käfig (3) ausgebildeten Mantel umgeben ist.

2. Silo nach Anspruch 1, **dadurch gekennzeichnet, dass** der Mantel der Förderschnecke (2) eine Vielzahl von achsparallelen Stäben (6, 9), beispielsweise acht Stäbe (6) mit Kreisquerschnitt, umfasst.

3. Silo nach Anspruch 2, **dadurch gekennzeichnet, dass** der Käfig (3) mit einer kreiszylindrischen Einhüllenden aus in Achsrichtung unterteilten Teilstücken aufgebaut ist, die jeweils an den Enden über Kreisringe (7) als Flansche zur Halterung der Stäbe (6, 9) und zur gegenseitigen Verbindung der Teilstücke verfügen.

4. Silo nach Anspruch 2, **dadurch gekennzeichnet, dass** die Stäbe (9) einen Exzenterquerschnitt aufweisen und in ihrer Drehlage einstellbar und lagefixierbar sind.

5. Silo nach Anspruch 1, **dadurch gekennzeichnet, dass** der Mantel.der Förderschnecke (2) aus achsparallelen Lamellen gebildet ist, deren Winkelstellung zwischen einer radialen und einer tangentialen Ausrichtung einstellbar und lagefixierbar ist.

6. Silo nach Anspruch 1, **dadurch gekennzeichnet, dass** der Mantel als Käfig bzw. Korb aus Stäben mit v-förmigem Querschnitt, insbesondere Winkeleisen (10), gebildet ist, deren Spitzen zur Drehachse der Schnecke weisen.

## Claims

1. Silo (1), e.g. a rectangular-shaped silo tower, having an arrangement that for the purpose of filling said silo comprises a rotationally driven screw conveyor (2) within a casing surrounding the latter, **characterized in that** for the purpose of introducing chippings or the like in a largerly dust-free manner into the silo the screw conveyor (2) is surrounded inside the silo (1) by a casing that is embodied as a cage (3) and extends in the vertical direction almost from the base to the silo cover.

2. Silo according to Claim 1, **characterized in that** the casing of the screw conveyor (2) comprises a multiplicity of axally parallel rods (6, 9), by way of example eight rods (6) having a circular cross section.

3. Silo according to Claim 2, **characterized in that** the cage (3) having a circular cylindrical envelope comprises sections that are adjoining in the axial direction, each comprising at the ends circular rings (7) as flanges so as to hold the rods (6, 9) and so as to mutually connect the sections.

4. Silo according to Claim 2, **characterized in that** the rods (9) are eccentric in cross section and can be adjusted in their rotational position and positionally fixed.

5. Silo according to Claim 1, **characterized in that** the casing of the screw conveyor (2) is formed by axially parallel slats, the angular position of which can be adjusted from a radial direction to a tangential direction and can be positionally fixed.

6. Silo according to Claim 1, **characterized in that** the casing is formed as a cage or basket of rods having a V-shaped cross section, in particular angle irons (10), the tips of which face the axis of rotation of the screw.

## Revendications

1. Silo (1), s'agissant par exemple d'un silo en forme d'une tour parallélépipédique, pourvu d'un système qui est destiné à le remplir et qui comporte une vis de transport (2) entraînée en rotation au sein d'une gaine entourant cette dernière, **caractérisé en ce que** la vis de transport (2) est entourée, à l'intérieur du silo (1), d'une gaine réalisée sous forme d'une cage (3) s'étendant dans la direction verticale quasiment depuis le sol jusqu'au plafond, permettant ainsi d'introduire dans ledit silo des copeaux ou matières assimilées en évitant dans une largement mesure le dégagement de poussières.

2. Silo selon la revendication 1, **caractérisé en ce que** ladite gaine de la vis de transport (2) comprend une pluralité de tiges (6, 9) dont les axes sont parallèles, par exemple huit tiges (6) à section circulaire.

3. Silo selon la revendication 2, **caractérisé en ce que** la cage (3) est réalisée à partir d'une courbe enveloppe cylindrique circulaire composée de segments juxtaposés dans la direction axiale, lesquels chacun pourvus, à leurs extrémités, d'anneaux circulaire (7) servant de brides destinées à supporter les tiges (6, 9) et permettant de relier lesdits segments entre eux.

4. Silo selon la revendication 2, **caractérisé en ce que** les tiges (9) présentent une section excentrique et sont ajustables en ce qui concerne leur situation de rotation et peuvent être arrêtées dans une situation donnée.

5. Silo selon la revendication 1, **caractérisé en ce que,** la gaine de la vis de transport (2) est réalisée à partir de lamelles dont les axes sont parallèles, leur position angulaire étant ajustable entre des orientations soit radiale soit tangentielle tout en pouvant être arrêtée dans une situation donnée.

6. Silo selon la revendication 1, **caractérisé en ce que** ladite gaine est réalisée sous forme d'une cage ou d'un panier composé(e) de tiges à section en V, s'agissant notamment de cornières (10) dont les pointes sont orientées vers l'axe de rotation de ladite vis.
